# EUROPEAN PATENT APPLICATION

(11) **EP 2 312 888 A1**
(43) Date of publication of application: **20.04.2011**
(21) Application number: 09305986.3
(22) Date of filing: 15.10.2009
(51) Int. Cl.: H04W 48/00

(54) **Method of roaming onto a non-cellular access network via a visited cellular network, and related system and gateway**

(71) Applicant: France Telecom, 75015 Paris (FR)
(72) Inventor: Ahmed, Tansir, LONDON, W45XS (GB); Antoine, Stéphane, LONDON, W45XS (GB); Barankanira, Delphin, 92794, ISSY LES MOULINEAUX (FR)
(74) Representative: Attali, Pascal

(57) **Abstract**

Method for allowing a mobile user having a subscription with a home cellular network comprising a set of PDN gateways to roam onto a non-cellular access network connected to the home cellular network through a visited cellular network, the visited cellular network comprising a DNS server and a serving gateway having an interface with the non-cellular access network using PMIP protocol and an interface with a PDN gateway of said set using GTP so as to form a PMIP-GTP chaining. The method comprises: obtaining (3) information relating to the set of PDN gateways of the home cellular network; transmitting to the DNS server a PDN gateway address resolution request (6) including the obtained information and a specification of PMIP-GTP chaining as a requested protocol; and in response, obtaining (7) an address of the PDN gateway forming a PMIP-GTP chaining together with the serving gateway and the non-cellular access network.

## Description

The present invention relates to roaming.

Roaming is a well known mechanism that allows a mobile user to extend connectivity service when located under coverage of a network that is different from the home cellular network with which he/she has a subscription.

Roaming is provided, inter alia, in the Evolved Packet System (EPS) system defined by the 3rd Generation Partnership Project (3GPP). In this case, it allows a User Equipment (UE) to extend connectivity service under coverage of a 3GPP access network that is difference from his/her home 3GPP network.

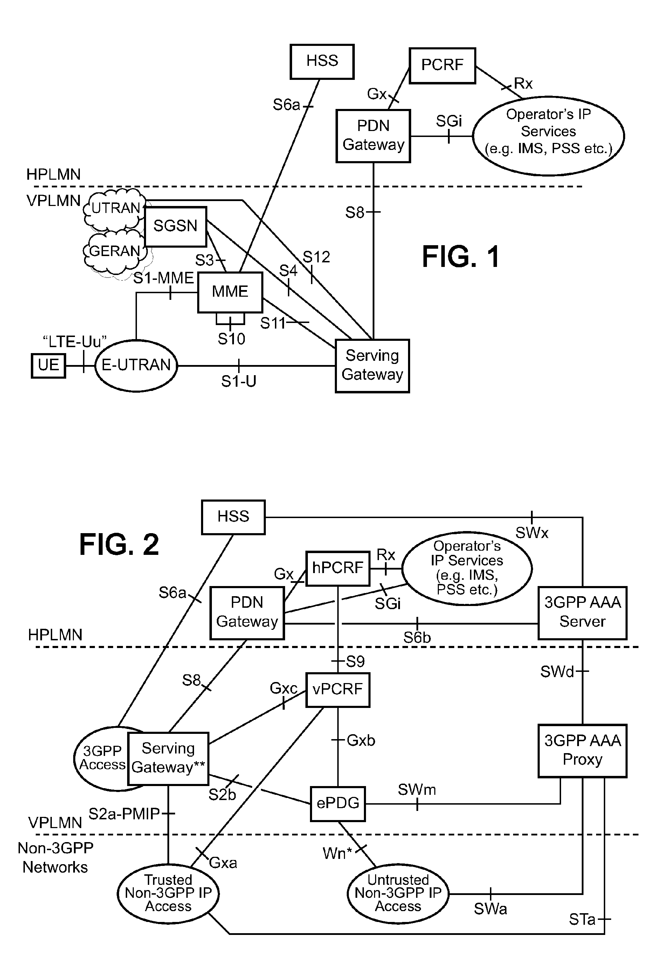

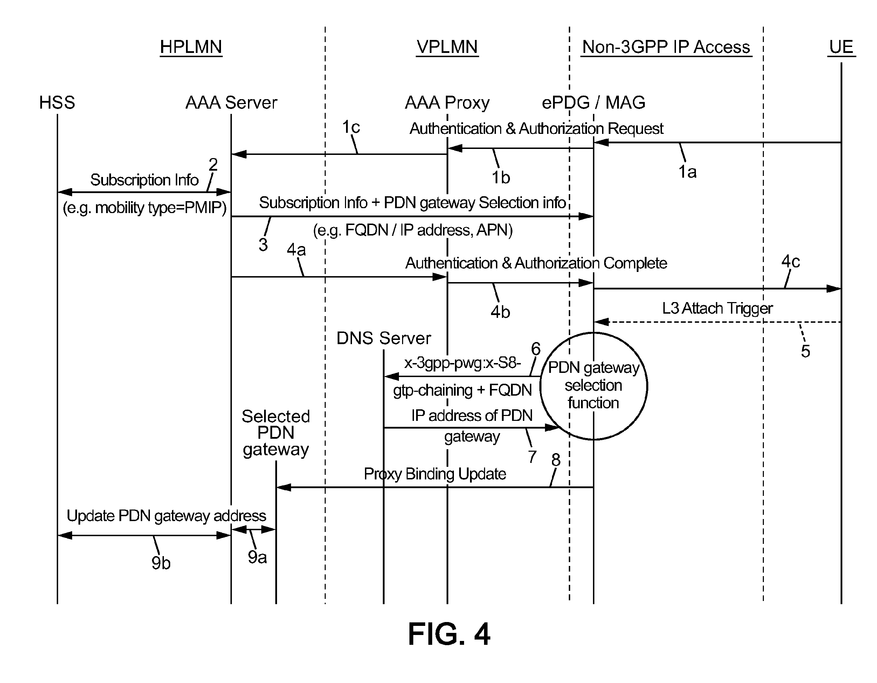

For instance, Figure 4.2.2-1 of the 3GPP technical specification TS 23.401 v9.1.0, "General Packet Radio Service (GPRS) enhancements for Evolved Universal Terrestrial Radio Access Network (E-UTRAN) access (Release 9)" of June 2009, which is reproduced in FIG.1, shows an example of a roaming architecture for 3GPP accesses. In this architecture, a serving gateway of a Visited Public Land Mobile Network (VPLMN) is connected to a Packet Data Network (PDN) gateway of a Home Public Land Mobile Network (HPLMN) through an interface S8. The UE user can have connectivity to his/her HPLMN via this interface.

The S8 interface may support the Proxy Mobile IPv6 (PMIPv6, hereafter called PMIP) protocol as defined by the IETF Network Working Group Request for Comments RFC 5213 "Proxy Mobile IPv6" of August 2008.

Alternatively, the S8 interface may support GPRS Tunneling Protocol (GTP), as specified in 3GPP TS 29.281 v8.1.0, "General Packet Radio System (GPRS) Tunneling Protocol User Plane (GTPv1-U) (Release 8)" of March 2008 and 3GPP TS 29.274 v8.1.1, "3GPP Evolved Packet System (EPS); Evolved General Packet Radio Service (GPRS) Tunneling Protocol for Control Plane (GTPv2-C); Stage 3 (Release 8)" of March 2009.

Other roaming architectures and options for 3GPP accesses are also possible and specified in the above-mentioned 3GPP TS 23.401.

Moreover, the EPS system also provides roaming for non-3GPP accesses (i.e. non-3GPP access networks), such as non-3GPP Internet Protocol (IP) accesses, e.g. WiFi, WiMax or other.

The 3GPP technical specification TS 23.402 v9.1.0, "Architecture enhancements for non-3GPP accesses (Release 9)" of June 2009 deals with such inter system roaming, i.e. mobility between 3GPP and non-3GPP accesses.

Its Figure 4.2.3-2, which is reproduced in FIG.2, shows an example of roaming architecture making this kind of roaming possible. In this example, connectivity to the HPLMN is allowed through the S2a interface between a trusted non-3GPP IP access and the serving gateway of a VPLMN (or S2b in case of an untrusted non-3GPP IP access) and the S8 interface between the serving gateway and the PDN gateway of the HPLMN. The protocol used on those interfaces is PMIP, such that this architecture is called chained PMIP-based S8-S2a/b.

The above-mentioned 3GPP TS 23.402, especially in its section 4.5.1, defines a PDN gateway selection function whose role is to allocate a PDN gateway that shall provide the PDN connectivity for the non-3GPP access.

The PDN gateway selection function interacts with a 3GPP Authentication Authorization Accounting (AAA) Server in the HPLMN and/or a 3GPP AAA Proxy in the VPLMN and uses subscription information relating to the mobile user provided by the Home Subscriber Server (HSS) to the 3GPP AAA Server.

The PDN gateway selection function for trusted/untrusted non-3GPP access using PMIP on S2a/S2b interface, as shown in FIG.2, is implemented in the Mobile Access Gateway (MAG), which is a gateway router located in the trusted non-3GPP access, or in the so-called evolved Packet Data Gateway (ePDG), which is a gateway located in the VPLMN in case of untrusted non-3GPP access.

During the initial authentication and authorization process, PDN gateway selection information for each of the PDN gateways in the HPLMN is transmitted to the non-3GPP access. The PDN gateway selection information includes:
- the PDN gateway identity, which is a logical name such as a domain name (Fully Qualified Domain Name - FQDN) or IP address and an Access Point Name (APN); or
- an APN and an indication whether the allocation of a PDN gateway from the VPLMN is allowed or a PDN gateway from the HPLMN shall be allocated.

To support separate PDN gateway addresses at a PDN gateway for different mobility protocols (PMIP, DSMIPv6, MIPv4 or GTP), the PDN gateway selection function takes mobility protocol type into account when deriving the PDN gateway address by using the Domain Name Service (DNS) function.

This is because PDN gateways may support different functions depending on the roaming architecture they are involved in or the mobility protocol(s) they support. For example, the PDN gateway of FIG.1 which supports either normal S8 PMIP or normal S8 GTP, or both, would require distinguishing itself from the PDN gateway of FIG.2 which supports e.g. chained PMIP-based S8-S2a/b or S2c DSMIPv6 as defined by the IETF Network Working Group RFC 5555 "Mobile IPv6 Support for Dual Stack Hosts and Routers" of June 2009, by using a different IP address.

Therefore, it must be ensured that the PDN gateway selection function selects a PDN gateway supporting the right protocols. To do so, appropriate IP address resolution must take place using DNS.

In the existing DNS resolution mechanism, as specified in the IETF Network Working Group RFC 1035 "Domain Names - Implementation and Specification" of November 1987, one must either know the exact address of a server to contact it, or broadcast a question.

The IETF Network Working Group RFC 2782 "A DNS RR for Specifying the Location of Services (DNS SRV)" of February 2000 introduces a DNS RR (Resource Record), which specifies the location of the server(s) for a specific protocol and domain. The new DNS RR, called SRV RR, allows administrators to use several servers for a single domain, to move services from host to host with little fuss, and to designate some hosts as primary servers for a service and others as backups. Clients ask for a specific service/protocol for a specific domain, and get back the names of any available servers. The format of a SRV-cognizant lookup name is: _Service._Proto.DomainName.

For example, if a SRV-cognizant Lightweight Directory Access Protocol (LDAP) client wants to discover a LDAP server that supports Transmission Control Protocol (TCP) protocol and provides LDAP service for the domain example.com, it does a lookup of: _Idap._tcp.example.com.

The IETF Network WG RFC 3958 "Domain-based Application Service Location using SRV RRs and the Dynamic Delegation Discovery Service (DDDS)" of January 2005 defines a generalized mechanism for application service naming that allows service location without relying on rigid domain naming conventions specified in RFC 2782. The proposal defines a Dynamic Delegation Discovery System (DDDS) application to map domain name, application service name, and application protocol dynamically to target server and port (see also the IETF Network WG RFC 3401 "Dynamic Delegation Discovery System (DDDS); Part One: The Comprehensive DDDS" of October 2002 relating to DDDS).

The "Service Parameters" for this application take the form of a string of characters. It may consist of an empty string, an "Application Service", or an "Application Service" with one or more "Application Protocol" specifications separated by the ":" symbol. The format used for this string of characters is: service_parms = app-service : app-protocol.

"Application Service" may be either experimental (i.e. optional) service or Internet Assigned Numbers Authority (IANA) registered service. Both the service types are represented by 32-character string tags, where an experimental service tag always begins with the "x-" symbol.

Likewise, "Application Protocol" may be either experimental protocol or IANA registered protocol, where the 32-character string tag of the former always begins with the "x-" symbol.

In the EPS system, the DNS mechanism using SRV RRs defined in the above-mentioned RFC 3958 has been adopted, as detailed in the 3GPP technical specification TS 23.003 v8.5.0 "Numbering, Addressing and Identifications (Release 8)" of June 2009.

In this mechanism, a list of "service-parms" names is required to identify a specific "service" from a PDN gateway, while resolving the IP address of the PDN gateway through DNS procedure.

In Table 19.4.3.1 in section 19.4.3 of 3GPP TS 23.003, several "app-service" and "app-protocol" names are specified, which are all categorized as experimental according to RFC 3958. Currently, "app-service" names identify 3GPP node type (e.g. PDN gateway) and "app-protocol" names identify 3GPP interfaces (e.g. S5, S8, S2a, S2b).

Table 1 below shows the list of "app-service" and "app-protocol" names currently specified for the PDN gateway.

**Table 1**

| **Description** | **IETF RFC 3958 section 6.5 "app-service" name** | **IETF RFC 3958 section 6.5 "app-protocol" name** |
|---|---|---|
| PDN gateway and interface types supported by the PDN gateway | x-3gpp-pgw | x-s5-gtp , x-s5-pmip, x-s8-gtp , x-s8-pmip, x-s2a-pmip, x-s2a-mipv4, x-s2b-pmip, x-s2c-dsmip, x-gn, x-gp |

The list of available "app-service" and "app-protocol" names is thus limited and corresponds to all possible interface types specified in the 3GPP specifications so far.

As an example, the "app-protocol" name x-s8-gtp would apply for the PDN gateway of FIG.1 if GTP is used over the S8 interface between the PDN gateway and the serving gateway. The "app-protocol" name x-s8-pmip would apply for the PDN gateway of FIG.2 if PMIP is used over the S8.

Back to the roaming for non-3GPP accesses, it has come to the attention of the inventors of the present invention that PMIP is not yet deployed in operator home cellular networks today, and might not be in the near future either. Likewise, the chained PMIP-based S8-S2a/b architecture might not be that common in practice. Also, the non-3GPP accesses generally do not support GTP.

Another roaming architecture may thus be needed. However, as it is not yet defined and specified in the 3GPP specifications, it may not be compatible with the address resolution mechanism explained above.

The present invention envisages another roaming architecture for non-3GPP accesses and proposes an address resolution mechanism compatible with such roaming architecture.

The invention thus proposes a method for allowing a mobile user having a subscription with a home cellular network to roam onto a non-cellular access network connected to the home cellular network through a visited cellular network, the home cellular network comprising a set of PDN (Packet Data Network) gateways, the visited cellular network comprising a serving gateway having an interface with the non-cellular access network using PMIP (Proxy Mobile IP) protocol and an interface with a PDN (Packet Data Network) gateway of said set using GTP (GPRS Tunneling Protocol) so that the non-cellular access network, the serving gateway and said PDN gateway form a PMIP-GTP chaining, the visited cellular network further comprising a DNS (Domain Name System) server. The method comprises the following steps:
- obtaining information relating to the set of PDN gateways of the home cellular network;
- transmitting to the DNS server a PDN gateway address resolution request including the obtained information relating to the set of PDN gateways of the home cellular network and a specification of PMIP-GTP chaining as a requested protocol; and
- responsive to the PDN gateway address resolution request, obtaining an address of the PDN gateway forming a PMIP-GTP chaining together with the serving gateway and the non-cellular access network.

In this way, the method takes place in a roaming architecture involving a PMIP-GTP chaining (i.e. a chaining of a PMIP interface between a non-cellular access network and visited cellular network, and a GTP interface between the visited cellular network and a home cellular network, PMIP and GTP being the well known protocols mentioned in the introduction above). In the inventor's opinion, such architecture is more likely to be deployed in future networks, due to e.g. its simplicity and cost of deployment, and would offer technical advantages compared to the roaming architectures envisaged to date.

By proposing a PDN gateway address resolution specifying PMIP-GTP chaining as a requested protocol, the method also offers a PDN gateway selection compatible with this new roaming architecture, which was not possible in an unambiguous and satisfactory manner under the 3GPP technical specifications as they stood so far.

According to advantageous embodiments of the present invention, which may be combined in any suitable way:
- the obtained information relating to the set of PDN gateways of the home cellular network includes a domain name. Obtaining a domain name, e.g. FQDN information, would comply with existing systems, such as the one described in the above-mentioned 3GPP TS 23.402;
- the information relating to the set of PDN gateways of the home cellular network is obtained within the framework of an authentication and authorization procedure (1a-1c; 4a-4c) of the mobile user. This mode of operation would take benefit from the messages exchanged during the authentication and authorization procedure and avoid further additional signaling;
- the authentication and authorization procedure involves an AAA (Authentication Authorization Accounting) proxy in the visited cellular network, an AAA (Authentication Authorization Accounting) server in the home cellular network and a HSS (Home Subscriber Service) in the home cellular network which provides subscription information relating to the mobile user. This would comply with the architecture of some existing systems, such as the one described in the above-mentioned 3GPP TS 23.402;
- the steps of transmitting the PDN gateway address resolution request to the DNS server and of obtaining an address of the PDN gateway forming a PMIP-GTP chaining together with the serving gateway and the non-cellular access network are performed by a PDN gateway selection function implemented in a gateway located in the non-cellular access network or the visited cellular network. This centralization of the steps involved in the PDN gateway selection avoids transmitting signaling between a plurality of devices. It also complies with existing specifications such as the above-mentioned 3GPP TS 23.402;
- the steps of transmitting the PDN gateway address resolution request to the DNS server and of obtaining an address of the PDN gateway forming a PMIP-GTP chaining together with the serving gateway and the non-cellular access network follow an attach trigger request (5) from the mobile user. This would also save signaling;
- the method further comprises storing in the home cellular network an association between the mobile user and the PDN gateway forming a PMIP-GTP chaining together with the serving gateway and the non-cellular access network. In this way, next time the same mobile user requests roaming services onto the same non-cellular access through the same visited cellular network, he/she will not have to go through at least some of the above described steps;
- the home cellular network and the visited cellular network include a 3GPP access, while the non-cellular access network includes a trusted or untrusted non-3GPP IP access. This would comply with the EPS system.

The invention also proposes a system for allowing a mobile user having a subscription with a home cellular network to roam onto a non-cellular access network connected to the home cellular network through a visited cellular network according to the above mentioned method, the home cellular network comprising a set of PDN (Packet Data Network) gateways, the visited cellular network comprising a serving gateway having an interface with the non-cellular access network using PMIP (Proxy Mobile IP) protocol and an interface with a PDN (Packet Data Network) gateway of said set using GTP (GPRS Tunneling Protocol) so that the non-cellular access network, the serving gateway and said PDN gateway form a PMIP-GTP chaining, the visited cellular network further comprising a DNS Domain Name System (Domain Name System) server. The system comprises:
- an information obtaining unit for obtaining information relating to the set of PDN gateways of the home cellular network;
- a transmission unit for transmitting to the DNS server a PDN gateway address resolution request including the obtained information relating to the set of PDN gateways of the home cellular network and a specification of PMIP-GTP chaining as a requested protocol; and
- an address obtaining unit for obtaining an address of the PDN gateway forming a PMIP-GTP chaining together with the serving gateway and the non-cellular access network, responsive to the PDN gateway address resolution request.

The invention also proposes a PDN gateway selection function as well as a PDN gateway selection function computer program capable of being loaded and run in a gateway located in the non-cellular access network or the visited cellular network of the above mentioned system. The PDN gateway selection function computer program comprises code instructions arranged at least for:
- transmitting to the DNS server a PDN gateway address resolution request including information relating to the set of PDN gateways of the home cellular network and a specification of PMIP-GTP chaining as a requested protocol; and
- responsive to the PDN gateway address resolution request, obtaining an address of the PDN gateway forming a PMIP-GTP chaining together with the serving gateway and the non-cellular access network.

The preferred features of the above aspects which are indicated by the dependent claims may be combined as appropriate, and may be combined with any of the above aspects of the invention, as would be apparent to a person skilled in the art.
- FIGs.1 and 2, already discussed, are schematic views of roaming architectures of the prior art;
- FIG.3 is a schematic view of a roaming architecture in which the present invention can take place; and
- FIG.4 is a chart showing a non-limiting example of a sequence of messages transmitted in an embodiment of the invention.

The invention aims at allowing a mobile user having a subscription with a home cellular network to roam onto a non-cellular access network connected to the home cellular network through a visited cellular network.

It will be more particularly described in the following in the context of an Evolved Packet System (EPS) system, where a User Equipment (UE) user having a subscription with his/her Home Public Land Mobile Network (HPLMN) is provided with roaming services onto a trusted or untrusted non-GPP IP access (e.g. WiFi, WiMax or other) through a Visited Public Land Mobile Network (VPLMN). It will be noted however that the present invention can take place in other systems, i.e. other types of cellular and non-cellular networks as it will appear to one skilled in the art.

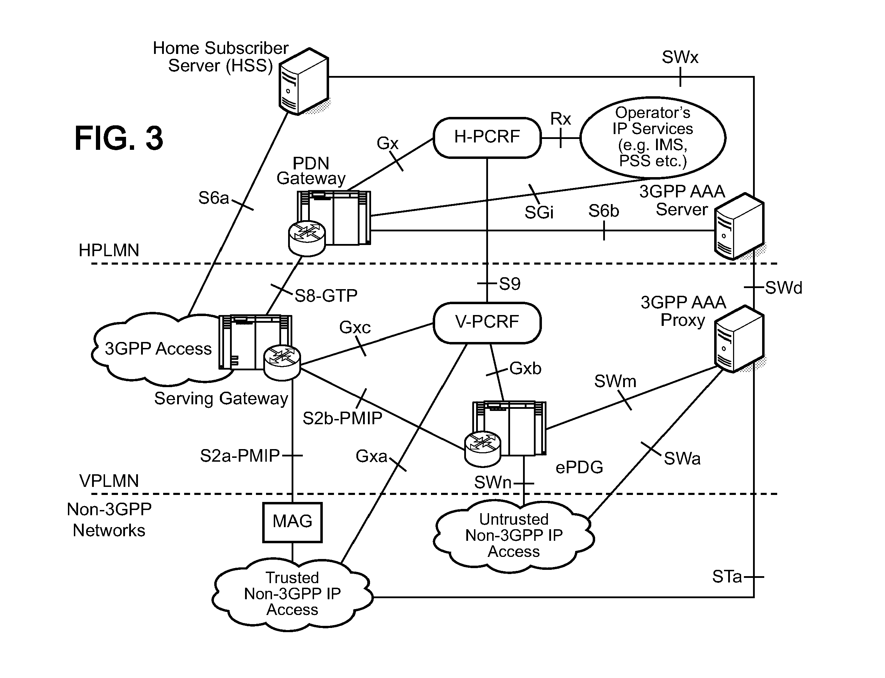

A non-limiting example of a roaming architecture in which the present invention can take place is shown in FIG.3.

In this architecture, the HPLMN comprises a set of Packet Data Network (PDN) gateways, which can consist in only one PDN gateway as shown in FIG.3 or more than one PDN gateway.

The VPLMN comprises a serving gateway having an interface with a non-3GPP IP access using PMIP (Proxy Mobile IPv6). This interface may be the S2a interface in case of a trusted non-3GPP IP access or the S2b interface in case of an untrusted non-3GPP IP access for example. In the latter case, the S2b interface takes place between the VPLMN and the untrusted non-3GPP IP access, but actually connects the VPLMN to the evolved Packet Data Gateway (ePDG) within the VPLMN, the ePDG being in turn connected to the untrusted non-3GPP IP access via the SWn interface.

The VPLMN serving gateway also has an interface with one (as shown in FIG.3) or more than one PDN gateways of the above-mentioned set of PDN gateways using GPRS Tunneling Protocol (GTP).

In this way, the non-3GPP IP access, the serving gateway and the PDN gateway connected to the serving gateway using GTP form a PMIP-GTP chaining, which ensures connectivity to the HPLMN for a UE user under coverage of the non-3GPP IP access. Such PMIP-GTP chaining consists in a combination of PMIP-based S2a/b and GTP-based S8.

So the system of FIG.3 is very close to the one of FIG.2, except that the S8 interface supports GTP rather than PMIP. This is believed by the inventors of the present invention to be a more realistic option, since unlike PMIP, GTP is already deployed by 3GPP network operators.

It will be noted that the roaming architecture shown in FIG.3 is not specified in the 3GPP specifications as they stand currently.

Several implementations can be envisaged for this architecture. One example would be to have a PMIP-GTP protocol converter within the VPLMN serving gateway or between the VPLMN serving gateway and the HPLMN PDN gateway, so as to convert the PMIP uplink traffic into GTP protocol and the GTP downlink traffic into PMIP protocol.

As a PDN gateway supporting PMIP-GTP chaining supports extra functions compared to what is needed to support e.g. normal S8 GTP, the present invention makes it possible to distinguish both cases, by using different IP addresses.

Address resolution in relation to a PDN gateway supporting PMIP-GTP is performed in the following manner, by using a Domain Name Service (DNS) server located in the VPLMN, although other locations may also be possible.

First, information relating to the set of PDN gateways in the HPLMN is obtained. Then, a PDN gateway address resolution request is transmitted to the DNS server, said request including a specification of PMIP-GTP chaining as a requested protocol. And in response to the request, an address of the PDN gateway forming a PMIP-GTP chaining together with the serving gateway and the non-3GPP access is obtained.

FIG.4 shows a detailed example of a sequence of messages that may be exchanged in the system of FIG.3 in order to achieve address resolution. It is close to the process already carried out e.g. for a system as shown in FIG.2, except for the content of the messages exchanged with the DNS server. For the other messages, more detail can be found in the specifications mentioned in the introduction. This example is not limiting however, and many variants could be envisaged as will appear to one skilled in the art. In particular, the actual contribution of the involved entities may differ from this example.

In the example of FIG.4, an authentication and authorization request 1a-1c is transmitted by the UE and forwarded to the VPLMN AAA (Authentication Authorization Accounting) proxy and then to the HPLMN AAA Authentication Authorization Accounting) server.

A dialogue is then initiated between the AAA server and the Home Subscriber Server (HSS) in which subscription information relating to the UE user is sent from the HSS to the AAA server (message 2). The subscription information may include various information, such as a mobility type supported by the UE, namely PMIP in this example.

Information relating to the above-mentioned set of PDN gateways of the HPLMN is then obtained. In this example, it is transmitted from the AAA server to the Mobile Access Gateway (MAG) or ePDG, depending on whether the non-3GPP IP access is trusted or untrusted. The information may consist in the PDN gateway selection information mentioned above. That is, it may include, for the set of PDN gateways of the HPLMN, a related domain name (Fully Qualified Domain Name - FQDN) (or alternatively one IP address corresponding to one PDN gateway) and an Access Point Name (APN). Other information may be suitable as well in addition or instead. Advantageously, the information relating to the PDN gateways is sent together with the subscription information in message 3.

The authentication and authorization procedure is completed with the authentication and authorization complete message 4a-4c sent from the AAA server and forwarded to the AAA proxy and then to the MAG or ePDG.

It will be noted that the information relating to the set of PDN gateways of the HPLMN may be obtained in any other suitable manner. For example, that information may be obtained in other circumstances than an authentication and authorization procedure of the UE user, and/or without involving all or part of the HSS, AAA server and AAA proxy.

Back to FIG.4, address resolution is then achieved in cooperation with a DNS server which is located in the VPLMN for instance, so that an appropriate PDN gateway can be selected. This selection is advantageously carried out by a PDN gateway selection function, for example of the type described in the above mentioned 3GPP TS 23.402. This PDN gateway selection function may be implemented in a gateway located in the non-3GPP IP access, e.g. the MAG, in the VPLMN, e.g. the ePDG, or other. It can consist for example in a physical unit, such as a chip, a device or other, in a computer program capable of being loaded and run in a gateway, or a combination thereof.

The PDN gateway selection may follow an L3 attach trigger message 5, especially in the presence of a trusted non-3GPP access.

The PDN gateway selection function transmits to the DNS server a PDN gateway address resolution request 6. This request includes the information relating to the set of PDN gateways of the HPLMN, obtained e.g. on reception of the message 3. For instance, if the message 3 includes an FQDN, or other indication of a domain name, as mentioned above, the same may be included in the PDN gateway address resolution request 6.

The PDN gateway address resolution request 6 also includes specification of PMIP-GTP chaining as a requested protocol. It may advantageously comply with the SRV RR format defined in the above-mentioned RFC 3958, as specified by the above-mentioned 3GPP TS 23.003 v8.5.0. However, since no entry is provided for the "app-protocol" name for designating PMIP-GTP chaining in 3GPP TS 23.003 v8.5.0, a new name is introduced for that purpose by the present invention. For example, the experimental "app-protocol" name x-s8-gtp-chaining can achieve this role, as shown in FIG.4. Of course, this is a non-limiting example, and any other "app-protocol" name specific to PMIP-GTP chaining may be used instead, provided that it properly differentiates PMIP-GTP chaining and the other possible protocols, especially standard, unchained GTP for S8 (i.e. x-s8-gtp).

On receiving the PDN gateway address resolution request 6, the DNS server deduces therefrom that the PDN gateway selection function seeks a PDN gateway in the HPLMN that supports PMIP-GTP chaining, meaning that it can offer roaming connectivity to the UE user in a system architecture such as the one shown in FIG.3, with a PMIP S2a/S2b interface and an GTP S8 interface.

The DNS server can then check within the set of PDN gateways of the HPLMN, which one forms (or which ones form) a PMIP-GTP chaining together with the serving gateway and the non-3GPP access. It can respond to the PDN gateway address resolution request 6 with a response message 7 including an address, such as an IP address, of said PDN gateway(s).

Connectivity with the PDN gateway whose address was received in the message 7 is thus provided to the UE user when roaming onto non-3GPP access through the VPLMN serving gateway. When the addresses of several PDN gateways are included in the message 7, the PDN gateway selection function may select one of them. This selection may take any suitable criterion into account (e.g. random, load distribution, or other).

This result is highly beneficial because in the inventors' opinion PMIP-GTP chaining based roaming architecture is likely to be more widespread in the future than other roaming architectures, such as the one shown in FIG.2.

Also it could not be achieved with the tools provided by the technical specifications available to date, in particular the 3GPP TS 23.003 v8.5.0. Indeed, no specific "app-protocol" name was provided for such configuration. The only possible way of performing address resolution was thus to use an already defined "app-protocol" name both for its common use and for PMIP-GTP chaining. For example, x-s8-gtp may have been shared for S8-GTP and PMIP-GTP chaining. But this would make the address resolution ambiguous and thus unsatisfactory.

Note that in addition to allow the UE user to roam onto the non-3GPP access connected to the HPLMN through the VPLMN, the present invention can further allow a communication of the UE user started with the non-3GPP access to be transferred without disruption to the VPLMN or to the HPLMN in a handover procedure, since connectivity with the PDN gateway is generally maintained throughout communication.

Once the appropriate selected PDN gateway is known at the PDN gateway selection function, an association between said PDN gateway and the UE user may advantageously be stored in the HPLMN, for example in the PDN gateway itself and/or in the HSS.

As shown in FIG.4, this may be done for example by sending a proxy binding update message 8 from the PDN gateway selection function to the selected PDN gateway. Also an update PDN gateway address may be transmitted from the selected PDN gateway to the HSS through the AAA server.

In this way, next time the same UE user requests roaming services onto the same non-3GPP access through the same VPLMN, he/she will not have to go through at least some of the above described steps, since an appropriate PDN gateway capable of offering PMIP-GTP chaining based connectivity with the HPLMN will already be known. For example, it may be retrieved from the HSS or be inquired directly.

## Claims

1. A method for allowing a mobile user having a subscription with a home cellular network to roam onto a non-cellular access network connected to the home cellular network through a visited cellular network, the home cellular network comprising a set of PDN (Packet Data Network) gateways, the visited cellular network comprising a serving gateway having an interface with the non-cellular access network using PMIP (Proxy Mobile IP) protocol and an interface with a PDN (Packet Data Network) gateway of said set using GTP (GPRS Tunneling Protocol) so that the non-cellular access network, the serving gateway and said PDN gateway form a PMIP-GTP chaining, the visited cellular network further comprising a DNS (Domain Name System) server, the method comprising the following steps:
- obtaining (3) information relating to the set of PDN gateways of the home cellular network;
- transmitting to the DNS server a PDN gateway address resolution request (6) including the obtained information relating to the set of PDN gateways of the home cellular network and a specification of PMIP-GTP chaining as a requested protocol; and
- responsive to the PDN gateway address resolution request, obtaining (7) an address of the PDN gateway forming a PMIP-GTP chaining together with the serving gateway and the non-cellular access network.

2. The method as claimed in claim 1, wherein the obtained information relating to the set of PDN gateways of the home cellular network includes a domain name.

3. The method as claimed in claim 1, wherein the information relating to the set of PDN gateways of the home cellular network is obtained within the framework of an authentication and authorization procedure (1 a-1 c; 4a-4c) of the mobile user.

4. The method as claimed in claim 3, wherein the authentication and authorization procedure involves an AAA (Authentication Authorization Accounting) proxy in the visited cellular network, an AAA (Authentication Authorization Accounting) server in the home cellular network and a HSS (Home Subscriber Service) in the home cellular network which provides subscription information relating to the mobile user.

5. The method as claimed in claim 1, wherein the steps of transmitting the PDN gateway address resolution request to the DNS server and of obtaining an address of the PDN gateway forming a PMIP-GTP chaining together with the serving gateway and the non-cellular access network are performed by a PDN gateway selection function implemented in a gateway located in the non-cellular access network or the visited cellular network.

6. The method as claimed in claim 1, wherein the steps of transmitting the PDN gateway address resolution request to the DNS server and of obtaining an address of the PDN gateway forming a PMIP-GTP chaining together with the serving gateway and the non-cellular access network follow an attach trigger request (5) from the mobile user.

7. The method as claimed in claim 1, further comprising storing in the home cellular network an association between the mobile user and the PDN gateway forming a PMIP-GTP chaining together with the serving gateway and the non-cellular access network.

8. The method as claimed in claim 1, wherein the home cellular network and the visited cellular network include a 3GPP access, while the non-cellular access network includes a trusted or untrusted non-3GPP IP access.

9. A system for allowing a mobile user having a subscription with a home cellular network to roam onto a non-cellular access network connected to the home cellular network through a visited cellular network according to the method of any one of the foregoing claims, the home cellular network comprising a set of PDN (Packet Data Network) gateways, the visited cellular network comprising a serving gateway having an interface with the non-cellular access network using PMIP (Proxy Mobile IP) protocol and an interface with a PDN (Packet Data Network) gateway of said set using GTP (GPRS Tunneling Protocol) so that the non-cellular access network, the serving gateway and said PDN gateway form a PMIP-GTP chaining, the visited cellular network further comprising a DNS Domain Name System (Domain Name System) server, the system comprising:
- an information obtaining unit for obtaining (3) information relating to the set of PDN gateways of the home cellular network;
- a transmission unit for transmitting to the DNS server a PDN gateway address resolution request (6) including the obtained information relating to the set of PDN gateways of the home cellular network and a specification of PMIP-GTP chaining as a requested protocol; and
- an address obtaining unit for obtaining (7) an address of the PDN gateway forming a PMIP-GTP chaining together with the serving gateway and the non-cellular access network, responsive to the PDN gateway address resolution request.

10. A PDN gateway selection function gateway capable of being located in the non-cellular access network or the visited cellular network of the system as claimed in claim 9, the PDN gateway selection function gateway including at least said transmission unit and said address obtaining unit.

11. A PDN gateway selection function computer program capable of being loaded and run in a gateway located in the non-cellular access network or the visited cellular network of the system as claimed in claim 9, the PDN gateway selection function computer program comprising code instructions arranged at least for:
- transmitting to the DNS server a PDN gateway address resolution request (6) including information relating to the set of PDN gateways of the home cellular network and a specification of PMIP-GTP chaining as a requested protocol; and
- responsive to the PDN gateway address resolution request, obtaining (7) an address of the PDN gateway forming a PMIP-GTP chaining together with the serving gateway and the non-cellular access network.
